# EUROPÄISCHE PATENTSCHRIFT

(11) **EP 2 763 819 B1**
(45) Veröffentlichungstag und Bekanntmachung des Hinweises auf die Patenterteilung: **14.09.2016**
(21) Anmeldenummer: 12778263.9
(22) Anmeldetag: 08.10.2012
(51) Int. Cl.: B25J 15/02

(54) **GREIF- ODER SPANNVORRICHTUNG**
GRIPPING OR CLAMPING DEVICE
DISPOSITIF DE PRÉHENSION OU DE SERRAGE

(30) Priorität: 07.10.2011 DE 202011106379 U
(43) Veröffentlichungstag der Anmeldung: 13.08.2014
(73) Patentinhaber: Schunk GmbH & Co. KG Spann- und Greiftechnik, 74348 Lauffen am Neckar (DE)
(72) Erfinder: DRAB, Michael, 73033 Göppingen (DE); QUAAS, Matthias, 74232 Abstatt/Happenbach (DE)
(74) Vertreter: DREISS Patentanwälte PartG mbB
(86) Internationale Anmeldenummer: PCT/EP2012/069881
(87) Internationale Veröffentlichungsnummer: WO 2013/050604

(56) Entgegenhaltungen:
- DE-A1- 3 806 148
- US-A- 4 707 013
- US-A- 5 184 861

## Beschreibung

Die Erfindung betrifft eine Greif- oder Spannvorrichtung zum Greifen oder Spannen von Gegenständen, mit einem elektrischen Antrieb, wobei der Antrieb ein auf einer Abtriebswelle vorgesehenes Ritzel antreibt, und mit dem Ritzel bewegungsgekoppelten, über eine Backenführung entlang eines Grundteils verfahrbaren Backen.

Derartige Greif- oder Spannvorrichtungen sind aus dem Stand der Technik in Form der US 4,707,013 vorbekannt. Weitere Greif- oder Spannvorrichtungen sind aus der DE 38 06 148 A1 und der US 5,184,861 vorbekannt.

Der vorliegenden Erfindung liegt nun die Aufgabe zugrunde, eine derartige Greif- oder Spannvorrichtung zu optimieren beziehungsweise kompakter zu bauen.

Diese Aufgabe wird durch einen Gegenstand mit den Merkmalen des Anspruchs 1 gelöst. Hierdurch kann eine sehr kompakte Bauweise erzielt werden, da sich die Backen über die Nadellagerrollen gegenseitig abstützen. Ferner verringern sich auch auftretende Querkräfte. Dadurch kann die Greif- oder Spannvorrichtung insgesamt vergleichsweise kompakt bauen. Die das Ritzel aufweisende Abtriebswelle kann dabei die Motorwelle des elektrische Antriebs oder die Abtriebswelle eines dem elektrischen Antrieb nachgeschalteten Getriebes sein.

Dabei sind zwei einander gegenüberliegende Backen vorgesehen, wobei das Ritzel mittig zwischen den Backen angeordnet ist. Hierdurch können synchrone Kräfte beim Aufeinander-zu- beziehungsweise Voneinanderweg-Bewegen der Backen erzielt werden.

Ferner kann vorgesehen sein, dass die Drehachsen der Nadellagerrollen und die Ritzeldrehachse in einer Achsebene liegen. Auch dies trägt zu einer kompakten Bauweise bei. Vorzugsweise bildt dabei die Achsebene die Mittelebene zwischen den Backen. Auch dies führt zu einer vorteilhaften Kraftableitung bei kleinem Bauraum.

Ferner ist vorteilhaft, wenn die senkrecht zur Ritzeldrehachse verlaufende Mittellängsebene der Nadellagerrollen in der oder im Bereich der Mittelquerachse des Ritzels liegt. Auch dies führt zu einer vorteilhaften Kraftableitung bei kleinem Bauraum.

Vorzugsweise ist zwischen dem Ritzel und den Nadellagerrollen ein Schutzelement vorhanden ist, das einen Kontakt des Ritzel mit den Nadellagerrollen verhindert. Das Schutzelement kann dabei kappenartig ausgebildet sein und das Ritzel zumindest teilweise abdecken.

Vorteilhafterweise ist zudem vorgesehen, dass die Backenführung zwei einander abgewandte, parallel zur Ritzeldrehachse verlaufende, backenseitige Führungsflächenabschnitte und damit zusammenwirkende, grundteilseitige Gegenführungsflächen umfasst. Die Backenführung wird folglich von zwei, vorzugsweise parallel zueinander verlaufenden Seiten, die jeweils von einer Backe gebildet werden, und von den grundteilseitigen Gegenführungsflächen gebildet.

Dabei ist vorteilhaft, wenn zwischen den Führungsflächenabschnitten und den Gegenführungsflächen Rollenführungen und vorzugsweise Kreuzrollenführungen vorgesehen sind. Über diese Rollenführungen können zum einen Kräfte gut übertragen werden. Zum anderen ist eine leichtgängige Bewegung zwischen den Backen und dem Grundteil möglich. Ferner können dabei zwischen dem Ritzel und den Backen, senkrecht zur Ritzeldrehachse verlaufende Kräfte, vorhanden sein, um ein gegenseitiges Abstützen der Backen über Nadellagerrollen und ein Anliegen der Backen am Ritzel unter geeigneter Vorspannung zu erreichen. Dabei sind insbesondere die Rollenführungen und die Nadellagerrollen derart aufeinander abgestimmt, dass die Backen in Querrichtung unter Vorspannung angeordnet sind.

Zur Übertragung der Drehbewegung des Ritzels in eine Längsbewegung der jeweiligen Backe ist vorteilhafterweise vorgesehen, dass die jeweilige Backe einen Backengrundkörper und einen mit dem jeweiligen Ritzel zusammenwirkenden Zahnstangenabschnitt umfasst.

Dabei ist denkbar, dass der Zahnstangenabschnitt zum Backengrundkörper in Kraftübertragungsrichtung relativ bewegbar ist, wobei zwischen dem Backengrundkörper und dem jeweiligen Zahnstangenabschnitt ein eine elastische Nachgiebigkeit zulassendes Dämpfungselement vorgesehen ist. Dadurch kann erreicht werden, dass beim Greifen oder Spannen von Werkstücken mit gleicher Werkstückabmessung die miteinander zusammenwirkenden Teile der Greifvorrichtung aufgrund des Dämpfungselements geringeren impulsartigen Kräften, und damit geringerem Verschleiß, ausgesetzt sind. Auftretende Kraftimpulse werden aufgrund der Zulassung der Relativbewegung zwischen dem Backengrundkörper und dem Zahnstangenabschnitt sowie aufgrund des Vorsehens des Dämpfungselements abgedämpft. Aufgrund des Vorsehens des Dämpfungselements zwischen dem Backengrundkörper und dem Zahnstangenabschnitt erfolgt die Dämpfung auch unabhängig vom elektrischen Antrieb.

Gemäß der Erfindung ist ferner denkbar, dass der Zahnstangenabschnitt unter Vorspannung des Dämpfungselements am Backengrundkörper angeordnet ist. Dadurch kann erreicht werden, dass bis zur Überwindung der Vorspannkraft der Zahnstangenabschnitt synchron zum Backengrundkörper bewegt wird. Erst bei Überschreiten der Vorspannkraft tritt eine Relativbewegung zwischen dem Zahnstangenabschnitt und dem Backengrundkörper ein.

Weiter vorteilhaft ist das Dämpfungselement als Elastomerdämpfer, insbesondere als Elastomerblock, -kugel, -zylinder, -ring oder -schlauch ausgebildet. Der Elastomerdämpfer kann beispielsweise an den Backengrundkörper und/oder den Zahnstangenabschnitt angegossen sein. Denkbar ist auch, dass insbesondere der Zahnstangenabschnitt wenigstens abschnittsweise in den Elastomerdämpfer eingegossen ist.

Das Dämpfungselement kann allerdings gemäß der Erfindung auch als Federelement, insbesondere als Schrauben- oder Tellerfeder, ausgebildet sein. Ebenso ist denkbar, dass das Dämpfungselement als pneumatischer oder hydraulischer Stoßdämpfer ausgebildet ist.

Gemäß einer weiteren vorteilhaften Ausbildung der Erfindung ist vorgesehen, dass der Backengrundkörper und/oder der Zahnstangenabschnitt Führungsabschnitte zur Führung der Bewegung des Zahnstangenabschnitts aufweist. Dadurch wird eine vorgegebene Bewegungsbahn des Zahnstangenabschnitts bezüglich des Backengrundkörpers gewährleistet.

Besonders vorteilhaft ist, wenn ein Verstellmittel zur Verstellung der Vorspannung des Dämpfungselements und/oder des Zahnstangenabschnitts gegenüber dem Backengrundkörper vorgesehen ist. Dadurch wird beispielsweise die Einstellung des Zahnstangenabschnitts in Bewegungsrichtung der Backe relativ zum Backengrundkörper ermöglicht. Die Verstellung kann dabei auch entgegen der Vorspannung des Dämpfungselements erfolgen. Beispielsweise können hierzu entsprechend angeordnete Verstellschrauben Verwendung finden. Die Verstellschrauben können insbesondere mit ihrem freien Ende unmittelbar oder mittelbar, beispielsweise über das Dämpfungselement, gegen den Zahnstangenabschnitt wirken.

Weitere Vorteile und vorteilhafte Ausgestaltungen der Erfindung sind der nachfolgenden Beschreibung zu entnehmen, anhand derer verschiedene Ausführungsformen der Erfindung näher beschrieben und erläutert sind.

Es zeigen:
Figur 1 die Vorderansicht einer ersten erfindungsgemäßen Greifvorrichtung;
Figur 2a einen Schnitt durch die Greifvorrichtung gemäß Figur 1 entlang der Linie IIa;
Figur 2b einen Schnitt durch die Greifvorrichtung gemäß Figur 1 entlang der Linie IIb;
Figur 3 einen Längsschnitt durch die Greifvorrichtung gemäß Figur 1; und
Figur 4 eine Draufsicht auf die Greifvorrichtung gemäß Figur 1.

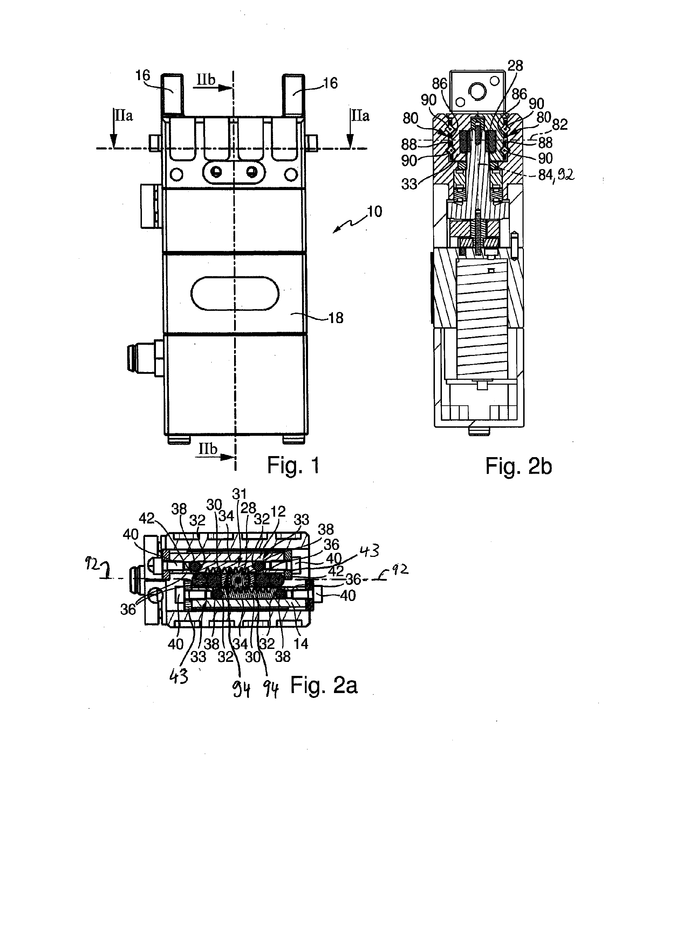

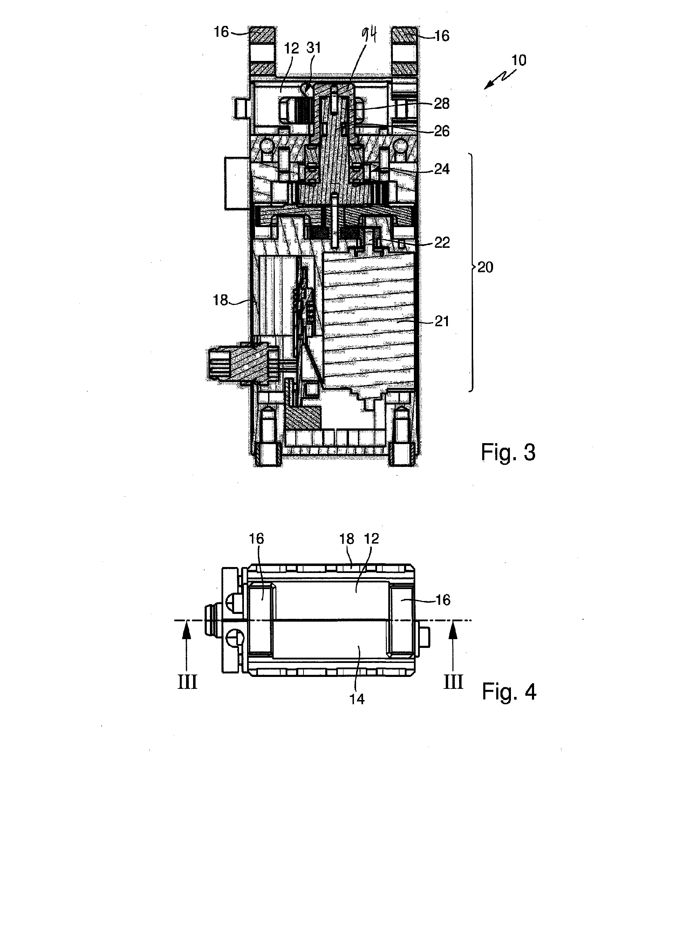

Die in den Figuren gezeigte Greifvorrichtung 10 umfasst zwei Backen 12 und 14, welche aufeinander zu und voneinander weg bewegbare Spannabschnitte 16 umfassen. Wie aus insbesondere dem Schnitt gemäß Figur 2a und 3 hervorgeht, umfasst die Greifvorrichtung 10 ein in einem Grundteil 18 angeordneten Antrieb 20.

Der Antrieb 20 wird von einem Elektromotor 21 und einem dem Elektromotor 21 nachgeschalteten mehrstufigen Stirnradgetriebe 24 gebildet. Dazu weist der Elektromotor 21 eine Antriebswelle 22 auf, die mit dem Antriebsgetriebe 24 gekoppelt ist. Das Antriebsgetriebe 24, beziehungsweise der Antrieb 20, weist eine Abtriebswelle 26 auf, welche mit den Spannmitteln 12 und 14 bewegungsgekoppelt ist. Die Bewegungskopplung wird dabei von einem an der Abtriebswelle 26 vorgesehenen Ritzel 28 und von backsenseitigen Krafteinleitabschnitten in Form von Zahnstangenabschnitten 30 gebildet. Wie aus dem Schnitt gemäß Figur 2a deutlich wird, sind zwei einander gegenüberliegende Zahnstangenabschnitte 30 vorgesehen. Das.Ritzel 28 ist dabei mittig zwischen den Zahnstangenabschnitten 30 angeordnet und kämmt beide Zahnstangenabschnitte 30.

Wie ebenfalls aus Figur 2a deutlich wird, wird jede Backe 12, 14 von einem Backengrundkörper 33 und einem Zahnstangenabschnitt 30 gebildet. Dabei weisen die Zahnstangenabschnitte 30 jeweils zwei einander gegenüberliegende, sich quer zur Bewegungsrichtung des jeweiligen Spannelements 12, 14 erstreckende Schmalseiten 32 auf. Die Zahnstangenabschnitte 30 sind zudem jeweils in taschenartigen Ausnehmungen 34 des jeweiligen Backengrundkörper 33 angeordnet. In Längsrichtung werden diese Ausnehmungen 34 von Stützabschnitten 36 begrenzt. Zwischen den backsenseitigen Stützabschnitten 36 und den Zahnstangenabschnitten 30 beziehungsweise deren Schmalseiten 32, sind jeweils Dämpfungselemente 38 in Form von Elastomerzylindern oder -kugeln vorgesehen. Aufgrund des Vorsehens der Dämpfungselemente 38 wird erreicht, dass die Zahnstangenabschnitte 30 gegenüber den Backengrundkörpern 33 in Kraftübertragungsrichtung elastisch nachgiebig verschiebbar angeordnet sind. Hierdurch kann erreicht werden, dass über die Backen 12, 14 in die Greifvorrichtung 10 eingeleitete Kraftimpulse von den Dämpfungselementen 38 gedämpft werden. Insgesamt wird hierdurch Verschleiß reduziert.

Die Zahnstangenabschnitte 30 sind durch Vorsehen der Dämpfungselemente 38 in Bewegungsrichtung der Backen 12, 14 unter Vorspannung an den Backengrundkörpern 33 angeordnet. Die Backen 12, 14 bilden dabei Kraftübertragungselemente zur Übertragung der vom Antrieb 20 erzeugten Kraft hin zum zu greifenden Gegenstand.

Wie ebenfalls aus insbesondere Figur 2a deutlich wird, sind an den Stützabschnitten 36 der Backengrundkörper 33 in Bewegungsrichtung verstellbare Verstellschrauben 40 vorgesehen, die einen axialen Anschlag 43 in Form einer Scheibe für zwischen den einander zugewandten Seiten der Zahnstangenabschnitte 30 vorgesehene Lagerollen 42, insbesondere NadelNadellagerrollen, bilden. Zudem ist denkbar, dass über die Verstellschrauben 40 die relative Lage der Zahnstangenabschnitte 30 bezüglich der Backengrundkörper 33 verstellbar sind. Hierdurch können zum einen Fertigungstoleranzen ausgeglichen werden. Zudem kann die jeweilige Hubendlage der Spannmittel 12, 14 bedingt eingestellt werden.

Zwischen dem Ritzel 28 und den Nadellagerrollen 42 ist ein kappenartig ausgebildetes Schutzelement 94 vorhanden, das einen Kontakt des Ritzels 28 mit den Nadellagerrollen 42 verhindert. Wie aus Figur 3 deutlich wird, ist das Schutzelement 94 entsprechend einer Kappe auf das Ritzel 28 aufgesetzt und deckt es an seiner Oberseite ab. Auf der den Zahnstangenabschnitten 30 zugewandten Seite ist das Schutzelement offen, so dass das Ritzel 28 mit den Zahnstangenabschnitten 30 zusammen wirken kann.

Zur Bewegungsführung der Zahnstangenabschnitte 30 bezüglich der Backengrundkörper 33 sind entsprechende Führungen, welche in den Figuren nicht zu erkennen sind, vorgesehen. Ferner sind zur positionsgenauen Anordnung der kugelförmigen Dämpfungselemente 38 an den Schmalseiten 32 der Zahnstangenabschnitte 30 konusartige Ausnehmungen vorgesehen.

Treffen nun beim Greifvorgang die Backen 12, 14, beziehungsweise deren Spannabschnitte 16, auf den zu greifenden Gegenstand, so treten, je nach Geschwindigkeit der Spannmittel 12, 14 und der Antriebskraft des Antriebs 20, Kraftimpulse innerhalb der Greifvorrichtung 10 auf. Durch das Vorsehen der Dämpfungselemente 38 zwischen den Backengrundkörpern 33 und den Zahnstangenabschnitten 30 können diese Kraftimpulse abgedämpft werden.

Aus insbesondere den Schnitten gemäß Figur 2a und 2b wird deutlich, dass die Backen mittels einer Backenführung 80 entlang des Grundteils 18 in Bewegungsrichtung geführt werden. Die Backenführung 80 umfasst zwei einander abgewandte, backenseitige Führungsabschnitte 86 und damit zusammenwirkenden, grundteilseitige Gegenführungsflächen 88. Wie insbesondere aus dem Schnitt gemäß Figur 2b deutlich wird, sind zwischen den Führungsabschnitten 86 und den Gegenführungsflächen 88 Kreuzrollen 90 vorgesehen. Dabei sind Kreuzrollen 90 jeweils entlang zweier parallel verlaufender Linien entlang der Bewegungsrichtung der Backen 12 und 14 angeordnet sind. Wie bereits erwähnt sind zwischen den Backen 12, 14 die Nadellagerrollen 42 vorgesehen. Die Kreuzrollen 90 und die Nadellagerrollen 42 sind dabei derart aufeinander abgestimmt, dass die Backen 12, 14 in Querrichtung unter Vorspannung zwischen den die Gegenführungsflächen 88 vorsehenden Abschnitten des Grundteils 18 angeordnet sind. Zudem wird gewährleistet, dass das Ritzel 28 die Zahnstangenabschnitte 30 funktionssicher kämmt.

Ferner wird deutlich, dass die Nadellagerrollen 42 der Backenführung 80 derart angeordnet sind, dass die Drehachsen der Nadellagerrollen parallel zur Ritzeldrehachse 84 verlaufen. Die Drehachsen der Nadellagerrollen 42 und die Ritzeldrehachse 84 liegen dabei in einer in Figur 2a erkennbaren Achsebene 92, wobei die Achsebene 92 die Mittelebene zwischen den Backen 12, 14 bildet.

Wie insbesondere aus dem Schnitt gemäß Figur 2b deutlich wird, liegt die Mittelquerebene der Nadellagerrollen 42 in der Mittelquerebene 82 des Ritzels 28. Die Mittelquerebene 82 des Ritzels 28 verläuft senkrecht zur Drehachse 84 des Ritzels 28 beziehungsweise der Abtriebswelle 26. Dabei verläuft die Mittelquerebene 82 zudem zwischen dem jeweils entlang einer Linie vorgesehenen Kreuzrollen 90 senkrecht zur Ritzeldrehachse 84. Hierdurch wird erreicht, dass zwischen der Backenführung 80 und dem Ritzel 28, beziehungsweise den Zahnstangenabschnitten 30, im Wesentlichen nur Kräfte übertragen werden, die in der Ebene 82 liegen und keine in Richtung der Ritzeldrehachse 84 verlaufende Kraftkomponenten aufweisen. Dadurch kann die Vorrichtung 10 vergleichsweise kompakt bauen; dennoch können vergleichsweise hohe Kräfte übertragen werden.

## Patentansprüche

1. Greif- oder Spannvorrichtung (10) zum Greifen oder Spannen von Gegenständen, mit einem elektrischen Antrieb (20), wobei der Antrieb (2) ein auf einer Abtriebswelle (26) vorgesehenes Ritzel (28) antreibt, mit mit dem Ritzel (28) bewegungsgekoppelten, über eine Backenführung (80) entlang eines Grundteils (18) verfahrbaren Backen (12, 14), **dadurch gekennzeichnet, dass** die Backenführung (80) im Bereich zwischen den Backen (12, 14) vorgesehene Nadellagerrollen (42) derart aufweist, dass die Drehachsen der Nadellagerrollen (42) parallel und beabstandet zur Ritzeldrehachse (84) verlaufen, wobei die Drehachsen der Nadellagerrollen (42) und die Ritzeldrehachse (84) nebeneinander in einer Achsebene (92) liegen, und wobei die Ritzeldrehachse (84) zwischen den Drehachsen der Nadellagerrollen (42) liegt.

2. Vorrichtung (10) nach Anspruch 1, **dadurch gekennzeichnet, dass** die Achsebene (92) die Mittelebene zwischen den Backen (12, 14) bildet.

3. Vorrichtung (10) nach Anspruch 1 oder 2, **dadurch gekennzeichnet, dass** die senkrecht zur Ritzeldrehachse (84) verlaufende Mittelquerebene (82) der Nadellagerrollen (42) in der oder im Bereich der Mittelquerebene (82) des Ritzels (28) liegt.

4. Vorrichtung (10) nach einem der vorherigen Ansprüche, **dadurch gekennzeichnet, dass** zwischen dem Ritzel und den Nadellagerrollen ein Schutzelement (94) vorhanden ist, das einen Kontakt des Ritzel (28) mit den Nadellagerrollen (42) verhindert.

5. Vorrichtung (10) nach einem der vorherigen Ansprüche , **dadurch gekennzeichnet, dass** die Backenführung (80) zwei einander abgewandte, parallel zur Ritzeldrehachse (84) verlaufendende backenseitige Führungsflächenabschnitte (86) und damit zusammenwirkende, grundteilseitige Gegenführungsflächen (88) umfasst.

6. Vorrichtung (10) nach Anspruch 5, **dadurch gekennzeichnet, dass** zwischen den Führungsflächenabschnitten (86) und den Gegenführungsflächen (88) Rollenführungen (90) und vorzugsweise Kreuzrollenführungen vorgesehen sind.

7. Vorrichtung (10) nach Anspruch 6, **dadurch gekennzeichnet, dass** die Rollenführungen (90) und die Nadellagerrollen (42) derart aufeinander abgestimmt sind, dass die Backen (12, 14) in Querrichtung unter Vorspannung angeordnet sind.

8. Vorrichtung (10) nach einem der vorhergehenden Ansprüche, **dadurch gekennzeichnet, dass** die Backe (12, 14) einen Backengrundkörper (33) und wenigstens einen mit dem Ritzel (28) zusammenwirkenden Zahnstangenabschnitt (30) umfasst.

9. Vorrichtung nach Anspruch 8, **dadurch gekennzeichnet, dass** der Zahnstangenabschnitt (30) zum Backengrundkörper (33) in Kraftübertragungsrichtung relativ bewegbar ist, wobei zwischen dem Backengrundkörper (33) und dem Zahnstangenabschnitt (30) ein eine elastische Nachgiebigkeit zulassendes Dämpfungselement (38) vorgesehen ist.

10. Vorrichtung nach Anspruch 9, **dadurch gekennzeichnet, dass** der Zahnstangenabschnitt (30) unter Vorspannung des Dämpfungselements (38) am Backengrundkörper (33) angeordnet ist.

11. Vorrichtung (10) nach Anspruch 9 oder 10, **dadurch gekennzeichnet, dass** das Dämpfungselement (38) als Elastomerdämpfer, insbesondere als Elastomerblock, -zylinder, -kugel, -ring oder -schlauch ausgebildet ist.

12. Vorrichtung (10) nach einem der Ansprüche 9 bis 11, **dadurch gekennzeichnet, dass** Verstellmittel (40) zur Verstellung der Vorspannung des Dämpfungselements (38) und/oder des Zahnstangenabschnitts (30) gegenüber dem Backengrundkörper (33) vorgesehen sind.

13. Vorrichtung (10) nach einem der Ansprüche 9 bis 12, **dadurch gekennzeichnet, dass** der Backengrundkörper (33) und/oder der Zahnstangenabschnitt (30) Führungsabschnitte zur Führung der Bewegung des Zahnstangenabschnitts aufweist.

## Claims

1. A gripping or clamping device (10) for gripping or clamping objects, having an electric drive mechanism (20), wherein the drive mechanism (20) drives a pinion (28), which is provided on a power takeoff shaft (26) and with jaws (12, 14) that are coupled for motion to the pinion (28) and are movable along a base part (18) via a jaw guide (80), **characterized in that** the jaw guide (80) has needle bearing rollers (42), provided in the vicinity between the jaws (12, 14), in such a way that the axes of rotation of the needle bearing rollers (42) extend parallel to and spaced apart from the axis of rotation (84), and the axes of rotation of the needle bearing rollers (42) and the axis of rotation (84) are located side by side in an axial plane (92), and axis of rotation (84) is located between the axes of rotation of the needle bearing rollers (42).

2. The device (10) of claim 1, **characterized in that** the axial plane (92) forms the center plane between the jaws (12, 14).

3. The device (10) of claims 1 or 2, **characterized in that** the central transverse plane (82), extending perpendicular to the axis of rotation (84), of the needle bearing rollers (42) is located in or in the vicinity of the central transverse plane (82) of the pinion (28).

4. The device (10) of one of the foregoing claims, **characterized in that** between the pinion and the needle bearing rollers, there is a guard element (94), which prevents a contact of the pinion (28) with the needle bearing rollers (42).

5. The device (10) of one of the foregoing claims, **characterized in that** the jaw guide (80) includes two guide face portions (86), toward the jaw and facing away from one another and extending parallel to the axis of rotation (84), and counterpart guide faces (88), cooperating with the guide face portions on the side toward the base part.

6. The device (10) of claim 5, **characterized in that** between the guide face portions (86) and the counterpart guide faces (88), roller guides (90), and preferably cross roller guides, are provided.

7. The device (10) of claim 6, **characterized in that** the roller guides (90) and the needle bearing rollers (42) are adapted to one another in such a way that the jaws (12, 14) are prestressed in the transverse direction.

8. The device (10) of one of the foregoing claims, **characterized in that** the jaw (12, 14) includes a jaw base body (33) and at least one rack portion (30) cooperating with the pinion (28).

9. The device of claim 8, **characterized in that** the rack portion (30) is movable in the force transmission direction relative to the jaw base body (33), and between the jaw base body (33) and the rack portion (30), a damping element (38) that permits an elastic resilience is provided.

10. The device of claim 9, **characterized in that** with prestressing of the damping element (38), the rack portion (30) is located on the jaw base body (33).

11. The device (10) of claim 9 or 10, **characterized in that** the damping element (38) is embodied as an elastomer damper, in particular as an elastomer block, cylinder, ball, ring, or hose.

12. The device (10) of one of claims 9 through 11, **characterized in that** adjusting means (40) are provided for adjusting the prestressing of the damping element (38) and/or of the rack portion (30) relative to the jaw base body (33).

13. The device (10) of one of claims 9 through 12, **characterized in that** the jaw base body (33) and/or the rack portion (30) has guide portions for guiding the motion of the rack portion.

## Revendications

1. Dispositif de préhension ou de serrage (10) pour saisir ou serrer des objets, comprenant un entraînement électrique (20), ledit entraînement (20) entraînant un pignon (28) monté sur un arbre de sortie (26), des mâchoires (12, 14) couplées en mouvement audit pignon (28) et pouvant être déplacées par l'intermédiaire d'un système de guidage des mâchoires (80) le long d'une pièce de base (18), **caractérisé en ce que** le guidage des mâchoires (80) présente des roulements à aiguilles (42) disposés dans la zone entre les mâchoires (12, 14) de sorte que les axes de rotation desdits roulements à aiguilles (42) s'étendent parallèlement et à distance de l'axe de rotation du pignon (84), les axes de rotation des roulements à aiguilles (42) et l'axe de rotation du pignon (84) s'étendant l'un à côté de l'autre dans un plan axial (92), et l'axe de rotation du pignon (84) étant situé entre les axes de rotation des roulements à aiguilles (42).

2. Dispositif (10) selon la revendication 1, **caractérisé en ce que** le plan axial (92) forme le plan médian entre les mâchoires (12, 14).

3. Dispositif (10) selon la revendication 1 ou 2, **caractérisé en ce que** le plan transversal médian (82) des roulements à aiguilles (42) qui s'étend perpendiculairement à l'axe de rotation du pignon (84) repose dans le plan transversal médian (82) du pignon (28) ou dans la zone de ce dernier.

4. Dispositif (10) selon l'une des revendications précédentes, **caractérisé en ce qu'**il y a entre le pignon et les roulements à aiguilles un élément de protection (94) qui empêche le pignon (28) d'entrer en contact avec les roulements à aiguilles (42).

5. Dispositif (10) selon l'une des revendications précédentes, **caractérisé en ce que** le guidage des mâchoires (80) comprend deux sections de surface de guidage (86) côté mâchoires orientées à l'opposé l'une de l'autre et s'étendant parallèlement à l'axe de rotation du pignon (84), et des surfaces de guidage opposées (88) côté pièce de base qui viennent coopérer avec les premières sections de surface de guidage.

6. Dispositif (10) selon la revendication 5, **caractérisé en ce qu'**il est prévu entre les sections de surface de guidage (86) et les surfaces de guidage opposées (88) des guidages à rouleaux (90) et de préférence des guidages à rouleaux croisés.

7. Dispositif (10) selon la revendication 6, **caractérisé en ce que** les guidages à rouleaux (90) et les roulements à aiguilles (42) sont ajustés entre eux de sorte que les mâchoires (12, 14) sont agencées sous précontrainte dans le sens transversal.

8. Dispositif (10) selon l'une des revendications précédentes, **caractérisé en ce que** la mâchoire (12, 14) comprend un corps de base de mâchoire (33) et au moins une section à crémaillère (30) coopérant avec le pignon (28).

9. Dispositif selon la revendication 8, **caractérisé en ce que** la section à crémaillère (30) peut être déplacée par rapport au corps de base de mâchoire (33) dans une direction de transmission de force, un élément amortisseur (38) permettant une élasticité étant prévu entre le corps de base de mâchoire (33) et la section à crémaillère (30).

10. Dispositif selon la revendication 9, **caractérisé en ce que** la section à crémaillère (30) est agencée au niveau du corps de base de mâchoire (33) avec l'élément amortisseur (38) sous précontrainte.

11. Dispositif (10) selon la revendication 9 ou 10, **caractérisé en ce que** l'élément amortisseur (38) est réalisé sous la forme d'un amortisseur en élastomère, en particulier sous la forme d'un bloc, d'un cylindre, d'une bille, d'un anneau ou d'un tuyau en élastomère.

12. Dispositif (10) selon l'une des revendications 9 à 11, **caractérisé en ce que** des moyens de réglage (40) sont prévus pour régler la précontrainte de l'élément amortisseur (38) et/ou de la section à crémaillère (30) par rapport au corps de base de mâchoire (33).

13. Dispositif (10) selon l'une des revendications 9 à 12, **caractérisé en ce que** le corps de base de mâchoire (33) et/ou la section à crémaillère (30) présente des sections de guidage pour guider le mouvement de la section à crémaillère.
